# EUROPEAN PATENT APPLICATION

(11) **EP 4 783 602 A1**
(43) Date of publication of application: **29.07.2026**
(21) Application number: 24867811.2
(22) Date of filing: 26.04.2024
(51) Int. Cl.: H04N 23/695, H04N 23/60, H04N 23/61

(54) **IMAGING SYSTEM, CONTROL METHOD, VIDEO GENERATION METHOD, AND COMPUTER PROGRAM**

(30) Priority: 21.09.2023 JP 2023156479
(71) Applicant: Panasonic Intellectual Property Management Co., Ltd., Kadoma-shi, Osaka 571-0057 (JP)
(72) Inventor: HIRATA, Yoichi, Kadoma-shi, Osaka 571-0057 (JP); NAKAI, Kensuke, Kadoma-shi, Osaka 571-0057 (JP); YOSHIDA, Norikatsu, Kadoma-shi, Osaka 571-0057 (JP); MOTODA, Kazumasa, Kadoma-shi, Osaka 571-0057 (JP); MATSUBARA, Kenjiro, Kadoma-shi, Osaka 571-0057 (JP)
(74) Representative: Novagraaf International SA
(86) International application number: PCT/JP2024/016478
(87) International publication number: WO 2025/062722

(57) **Abstract**

An imaging system includes: an imaging device that captures a video of a moving object; and a control device that is connected to the imaging device and that includes a communication circuit and an arithmetic circuit. The arithmetic circuit: acquires, at a first timing, video data including a plurality of frames captured by the imaging device and imaging time of each of the plurality of frames; acquires, at a second timing, imaging direction data including an imaging direction acquired by the imaging device in synchronization with each of the plurality of frames and the imaging time, the second timing being different from the first timing; obtains, from the plurality of frames of the video data, a movement amount of the moving object during capturing of the plurality of frames; obtains, from the imaging direction data, a movement amount in the imaging direction acquired in synchronization with the plurality of frames; and transmits a control signal to the imaging device in accordance with the movement amount of the moving object and the movement amount in the imaging direction, the control signal controlling the imaging direction in accordance with movement of the moving object.

## Description

### TECHNICAL FIELD

The present disclosure relates to an imaging system that tracks a moving object and captures a video of the moving object, a control method for controlling the imaging device, a video generation method, and a computer program.

### BACKGROUND ART

There is an imaging system that automatically tracks a moving object and captures a video of the moving object. For example, in such an imaging system, a control device executes panning and tilting control of the imaging device to track movement and capture an image (see, for example, PTL 1).

When the control device executes the panning and tilting control of the imaging device, a movement amount of the moving object in a plurality of images may be obtained using a timing at which the captured image is imported, and the panning and tilting control may be executed according to the obtained movement amount.

### Citation List

### Patent Literature

PTL 1: Chinese Patent No. 104394316

### SUMMARY OF THE INVENTION

However, the timing at which the control device captures an image from the imaging device depends on processing capability of the imaging device and a communication path. Therefore, obtaining the movement amount of the moving object based on the timing at which the control device captures the image may result in an error between the obtained movement amount and an actual movement amount of the moving object. Therefore, when the panning and tilting control is performed using the movement amount obtained based on the timing at which the control device imports the image, the pan/tilt operation by the imaging device may not be smooth.

The present disclosure provides an imaging system, a control method, a video generation method, and a computer program, that smoothly execute panning and tilting control in accordance with movement of a moving object, track the moving object, and capture a video of the moving object.

The imaging system according to the present disclosure includes: an imaging device that captures a video of a moving object; and a control device connected to the imaging device, in which the control device includes: a communication circuit that receives a video captured by the imaging device; and an arithmetic circuit that controls an imaging direction of the imaging device based on the received video, and the arithmetic circuit includes: acquiring, at a first timing, video data including a plurality of frames captured by the imaging device and imaging time of each of the plurality of frames; acquiring, at a second timing, imaging direction data including an imaging direction acquired by the imaging device in synchronization with each of the plurality of frames and the imaging time, the second timing being different from the first timing; obtaining, from the plurality of frames of the video data, a movement amount of the moving object during capturing of the plurality of frames; obtaining, from the imaging direction data, a movement amount in the imaging direction acquired in synchronization with the plurality of frames; and transmitting a control signal to the imaging device in accordance with the movement amount of the moving object and the movement amount in the imaging direction, the control signal controlling the imaging direction in accordance with movement of the moving object.

Such a general and specific aspect may be implemented by a system, a method, a computer program, and any combination of these.

The imaging system, the control method, the video generation method, and the computer program of the present disclosure can smoothly execute panning and tilting control in accordance with movement of a moving object, when the moving object is tracked and a video of the moving object is captured.

### BRIEF DESCRIPTION OF THE DRAWINGS

Fig. 1 is a block diagram illustrating a configuration of the imaging system according to an exemplary embodiment.
Fig. 2 is a diagram illustrating a configuration of imaging direction data transmitted and received by the imaging system in Fig. 1.
Fig. 3A is a diagram illustrating a configuration of a part of reference data used in the imaging system in Fig. 1.
Fig. 3B is a diagram illustrating a configuration of another part of the reference data used in the imaging system in Fig. 1.
Fig. 4 is a sequence diagram illustrating an example of processing in the imaging system in Fig. 1.
Fig. 5A illustrates an example of extracting a region of a person from one frame of video data.
Fig. 5B illustrates an example of extracting a region of a person from a frame subsequent to Fig. 5A.
Fig. 6A is a flowchart illustrating an example of processing in a control device of Fig. 1.
Fig. 6B is a flowchart illustrating an example of processing of generating a control signal in Fig. 6A.
Fig. 7 is a block diagram illustrating a configuration of a generation system according to a modification.
Fig. 8 is a schematic diagram illustrating an outline of the generation system in Fig. 7.
Fig. 9 is a sequence diagram illustrating an example of processing in the generation system in Fig. 7.

### DESCRIPTION OF EMBODIMENT

### (Exemplary embodiment)

Hereinafter, an exemplary embodiment of the present disclosure will be described with reference to the drawings. However, in detailed description, unnecessary parts in the description of the conventional technique and the substantially same configuration may be omitted. This is to simplify the description. In addition, the following description and the accompanying drawings are disclosed so that those skilled in the art can fully understand the present disclosure, and are not intended to limit the subject matter of the claims.

An imaging system, a control method, a video generation method, and a computer program according to the present disclosure execute panning and tilting control of an imaging device in accordance with movement of a moving object, when the moving object is tracked and a video of the moving object is captured.

### <Imaging system>

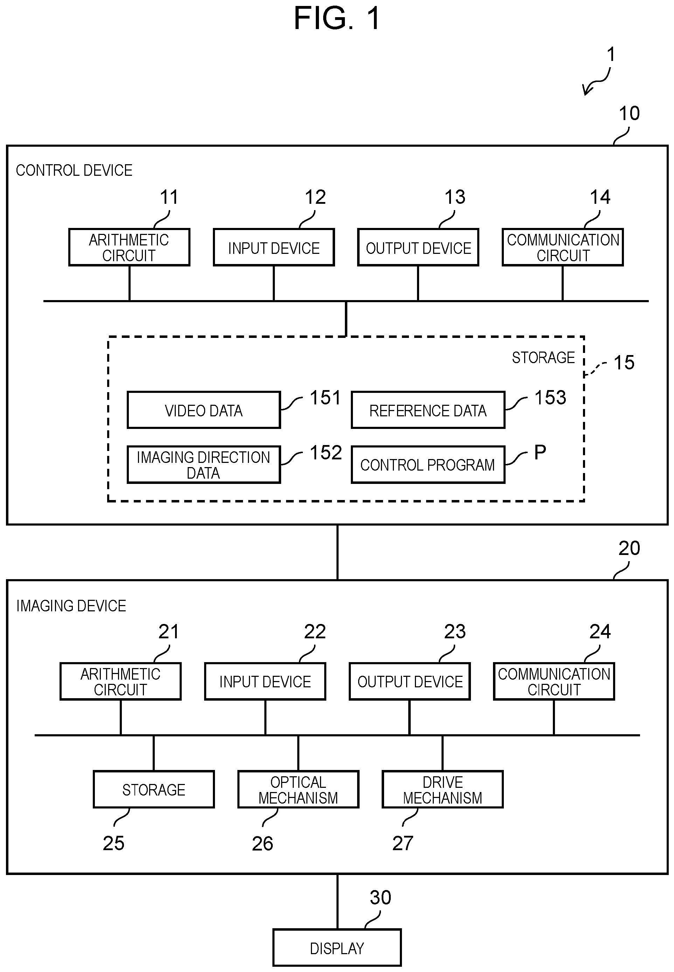

As illustrated in Fig. 1, imaging system 1 according to the exemplary embodiment includes control device 10, imaging device 20, and display 30. Control device 10 and imaging device 20 are connected so as to be able to communicate data with each other. Here, imaging device 20 is a pan-tilt camera capable of controlling a pan angle and a tilt angle (panning and tilting control). Imaging device 20 transmits the obtained video data to control device 10. For panning and tilting control, a pan angle and a tilt angle are used. However, the video data does not include a pan angle and a tilt angle. Therefore, in addition to the video data, imaging device 20 transmits imaging direction data indicating the pan angle and the tilt angle to control device 10. Control device 10 generates a control signal for the panning and tilting control of imaging device 20 based on the received video data and the received imaging direction data, and transmits the control signal to imaging device 20. Imaging device 20 executes the panning and tilting control based on the received control signal. Imaging device 20 is connected to display 30. Imaging device 20 displays the obtained video on display 30. For example, in a case where imaging device 20 is used as a security camera, a monitoring video captured by imaging device 20 is displayed on display 30.

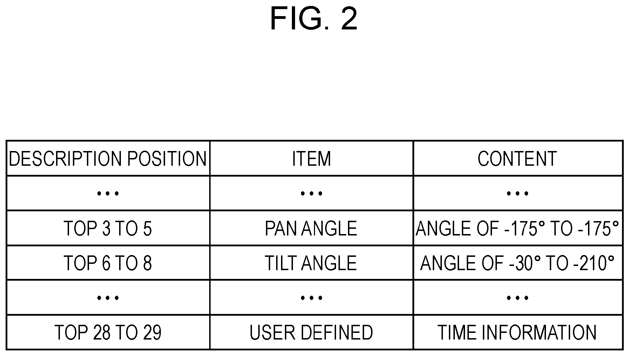

Here, in addition to data communication according to a general IP protocol, FreeD data communication according to the FreeD protocol can be performed between control device 10 and imaging device 20. The FreeD protocol is a protocol widely adopted for camera tracking information transmission. Specifically, the FreeD protocol is a protocol by which a pan-tilt camera transmits data used when a pan angle and a tilt angle in the own device are shared with other devices. Therefore, imaging device 20 transmits the FreeD data to control device 10 as the imaging direction data. A part of the configuration of the FreeD data will be described later with reference to Fig. 2. The video data transmitted from imaging device 20 includes a plurality of frames, and has a large data capacity, and thus data transmission is likely to be delayed. On the other hand, the FreeD data transmitted from imaging device 20 has a small data capacity, and is characterized in that a delay is less likely to occur in data transmission. Further, by using the existing FreeD data as the imaging direction data, transmission and reception of dedicated data including only a new imaging direction for executing the panning and tilting control is unnecessary.

### <Control device 10>

As illustrated in Fig. 1, control device 10 is an information processing device including arithmetic circuit 11, input device 12, output device 13, communication circuit 14, storage 15, and the like. Control device 10 acquires video data from imaging device 20, extracts a region of the moving object from the acquired video data, and generates a control signal for executing the panning and tilting control so as to track the moving object.

Arithmetic circuit 11 is a controller that controls entire control device 10. For example, arithmetic circuit 11 reads and executes control program P stored in storage 15. As a result, control device 10 realizes various processes related to generation of a control signal for executing the panning and tilting control of imaging device 20. Arithmetic circuit 11 may be various processors such as a CPU, an MPU, a GPU, an FPGA, a DSP, and an ASIC, or may be a dedicated hardware circuit.

Input device 12 can be an operation button, a keyboard, a mouse, a touch panel, a microphone, and the like used for operation and data input. Output device 13 can be a display, a speaker, or the like used for outputting a processing result or data.

Communication circuit 14 performs data communication with imaging device 20 and an external device. The data communication is performed in a wired manner and/or a wireless manner, according to a known communication standard, for example. For example, wired data communication may be performed by using, as communication circuit 14, a communication controller of a semiconductor integrated circuit that operates in accordance with the Ethernet (registered trademark) standard and/or the USB (registered trademark) standard. In addition, wireless data communication may be performed by using, as communication circuit 14, a communication controller of a semiconductor integrated circuit that operates in accordance with IEEE802.11 standard related to a wireless local area network (LAN) and/or so-called 4G/5G/6G fourth/fifth/sixth generation mobile communication systems and the like for mobile communication. In addition, communication circuit 14 performs data communication with imaging device 20 according to the FreeD standard.

Storage 15 is a recording medium that records various kinds of information. Storage 15 is implemented by, for example, a RAM, a ROM, a flash memory, a solid state drive (SSD), a hard disk drive, other storages, or an appropriate combination thereof. Storage 15 stores control program P which is a computer program executed by arithmetic circuit 11, and various data such as video data 151, imaging direction data 152, and reference data 153 received from imaging device 20.

Video data 151 is data including a plurality of consecutive frames captured by imaging device 20. Each frame included in video data 151 is associated with imaging time when the each frame is captured.

Imaging direction data 152 is data that associates information indicating the imaging direction of imaging device 20 with the imaging time. The information indicating the imaging direction is indicated by the pan angle and the tilt angle of the camera as imaging device 20. The imaging time included in video data 151 is synchronized with the imaging time included in imaging direction data 152. In imaging system 1, an example in which the FreeD data is used as the imaging direction data will be described. As illustrated in an example in Fig. 2, in the FreeD data, the pan angle is included in a region described by 3 Bytes of top three to five, and the tilt angle is included in a region described by 3 Bytes of top six to eight. Therefore, imaging system 1 uses the pan angle and the tilt angle as angle information indicating the imaging direction. Furthermore, the FreeD data includes a region that can be defined by the user in 2 Bytes of top twenty-eight to twenty-nine. In imaging system 1, the region that can be defined by the user including the time information is used as the imaging time. Note that the example illustrated in Fig. 2 is FreeD data of type A2, but the FreeD data may include a roll angle, zoom, and focus of the camera, as well as positional information of the camera when an arbitrary position is set as a reference, an orientation of a camera platform of the camera, and the like.

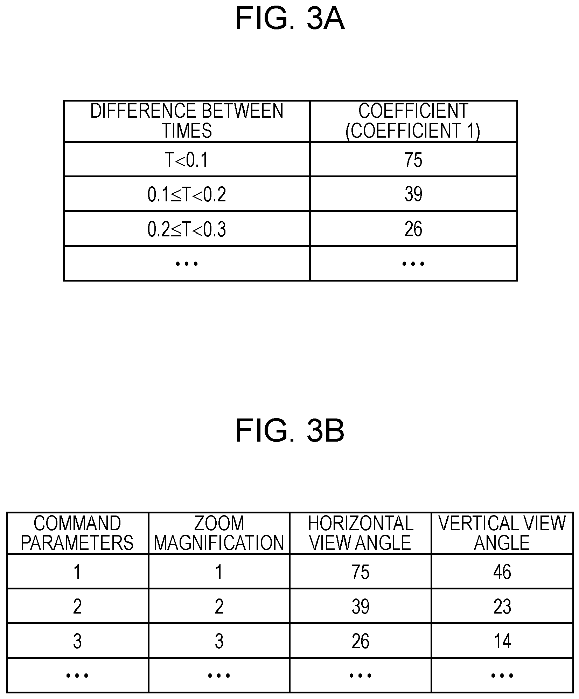

Reference data 153 is data that associates each value used for calculating control amounts of the pan angle and the tilt angle. For example, an example illustrated in Fig. 3A is coefficient data related to a coefficient used for a difference between times for each image, and an example illustrated in Fig. 3B is a view angle in a horizontal direction and a view angle in a vertical direction specified by a zoom magnification. A coefficient (coefficient 2) to be multiplied by the moving speed in the horizontal direction can be obtained using the view angle in the horizontal direction illustrated in Fig. 3B as a coefficient. In addition, a coefficient (coefficient 2) to be multiplied by the moving speed in the vertical direction can be obtained using the view angle in the vertical direction illustrated in Fig. 3B as a coefficient. Specifically, the coefficient (coefficient 2) can be obtained by dividing the view angle corresponding to each zoom magnification by the view angle when the zoom magnification is 1. For example, when the zoom magnification is 2 in the horizontal direction, a speed coefficient obtained by 39/75=0.52 (times) is obtained as the coefficient (coefficient 2) to be multiplied in the horizontal direction. In addition, when the zoom magnification is 2 in the vertical direction, a speed coefficient obtained by 23/46=0.50 (times) is obtained as the coefficient (coefficient 2) to be multiplied in the vertical direction.

Processing executed by arithmetic circuit 11 will be specifically described.

Arithmetic circuit 11 acquires the video data from imaging device 20 at a first timing. Specifically, at the first timing, arithmetic circuit 11 transmits, to imaging device 20, a first request signal for requesting transmission of captured video data. In response to the first request signal, arithmetic circuit 11 receives the video data from imaging device 20 via communication circuit 14. The video data includes a plurality of consecutive frames and imaging time of each frame. Arithmetic circuit 11 causes storage 15 to store received video data 151.

For transmission of the first request signal and reception of the video data, for example, a communication standard such as Ethernet can be used.

In addition, arithmetic circuit 11 acquires the imaging direction data from imaging device 20 at a second timing. Specifically, at the second timing, arithmetic circuit 11 transmits, to imaging device 20, a second request signal for requesting transmission of imaging direction data 152. In response to the second request signal, arithmetic circuit 11 receives the imaging direction data from imaging device 20 via communication circuit 14. The imaging direction data includes the pan angle and the tilt angle that are imaging directions acquired when each frame is captured, and the imaging time. In addition, arithmetic circuit 11 causes storage 15 to store received imaging direction data 152.

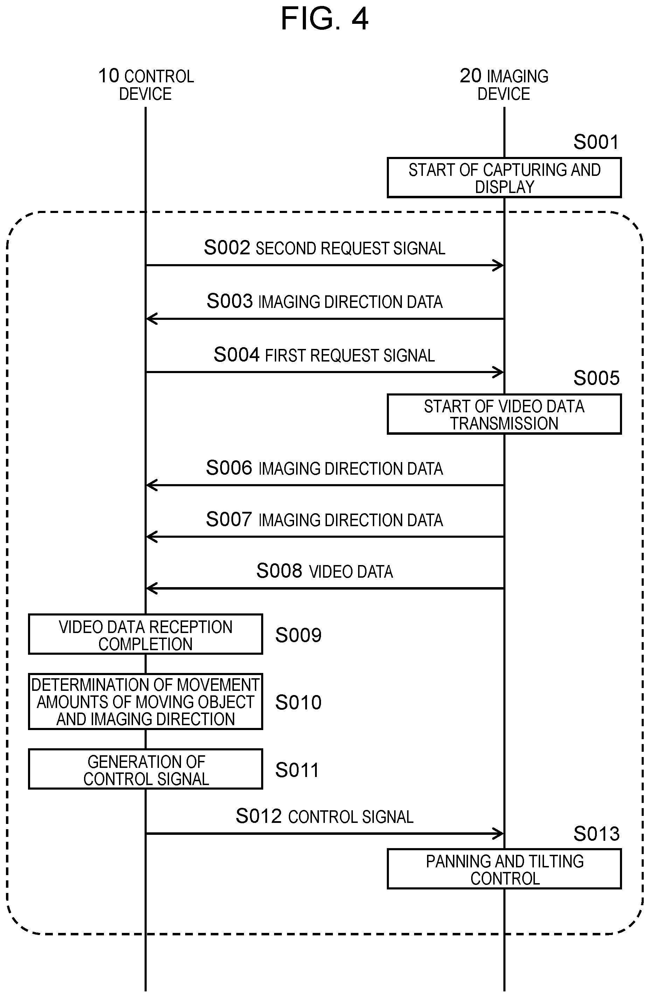

As described above, the communication standard of FreeD is applied to the transmission of the second request signal and the reception of the imaging direction data. As described above with reference to Fig. 2, the imaging direction data which is the FreeD data is characterized by having a data capacity of 26 Bytes smaller than that of the video data (for example, several MBytes). On the other hand, in the case of the video data, since the video data includes a plurality of frames, the data capacity increases up to several MBytes. As illustrated in the sequence diagram of Fig. 4, a time required after control device 10 transmits the first request signal to imaging device 20 (S004) until the reception of the video data responding from imaging device 20 is completed (S009) is defined as a first response time. In addition, a time required after control device 10 transmits (for example, S002) the second request signal to imaging device 20 until the imaging direction data responding from imaging device 20 is received (for example, S003) is defined as a second response time. At this time, the first response time is longer than the second response time. Therefore, even if video data 151 and imaging direction data 152 are related to the same imaging time, control device 10 may receive imaging direction data 152 first and then receive video data 151. The sequence diagram of Fig. 4 will be described in detail later.

The first timing is, for example, a periodic timing. The second timing is also a periodic timing, for example. However, the first timing and the second timing are different, and periods of the first timing are set to have longer intervals than those of periods of the second timing. Thus, the second request signal may be transmitted more frequently than the first request signal. Note that the first request signal and the second request signal are named in this manner not because the first request signal needs to be transmitted first, and either of these signals may be transmitted first.

Here, the first request signal may not be a signal for requesting transmission of all frames including the video captured by imaging device 20. For example, the first request signal may request video data including a part of the frames decimated at predetermined intervals. Furthermore, the second request signal requests transmission of the imaging direction data at a timing synchronized with the imaging time of the frame requested by the first request signal. Therefore, from the video data and the imaging direction data received from imaging device 20, control device 10 can specify the imaging direction in which each frame is captured by extracting the frame at the identical imaging time and the imaging direction based on the imaging time.

Arithmetic circuit 11 specifies the pan angle and the tilt angle of imaging device 20 at the time of capturing each frame at the timing when the reception of the video data transmitted from imaging device 20 in response to the first request signal is completed. The pan angle and the tilt angle of imaging device 20 at the time when each frame is captured are specified based on the imaging time included in video data 151 and imaging direction data 152 stored in storage 15. At the time of reception of video data 151 by arithmetic circuit 11, in video data 151, the frame and the imaging time are associated with each other, but the pan angle and the tilt angle at the time of capturing the frame are not associated with each other. Therefore, arithmetic circuit 21 extracts the pan angle and the tilt angle associated with the imaging time of each frame from imaging direction data 152. Consequently, arithmetic circuit 11 can specify the imaging direction at the imaging time of each frame by extracting the imaging direction associated with the imaging time of a target frame.

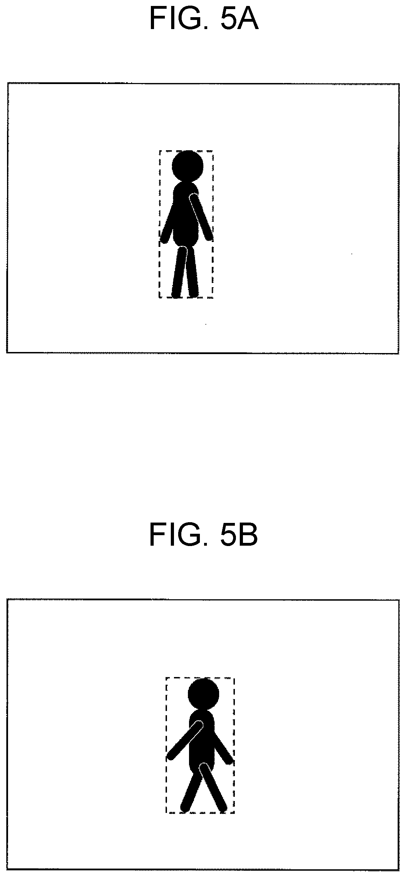

Arithmetic circuit 11 extracts a region of the moving object from each frame. Fig. 5A illustrates an example of a frame of the video data, and a region of the detected moving object is indicated by a rectangle in a broken line. In addition, Fig. 5B illustrates an example of a frame subsequent to Fig. 5A, and a region of the moving object detected in the same manner is indicated by a rectangle in a broken line. In this manner, arithmetic circuit 11 detects the region of the moving object from each frame included in video data 151. Arithmetic circuit 11 uses an object detection model learned in advance using images of a plurality of moving objects to detect the region of the moving object. Upon input of an image including a moving object, the object detection model outputs a region of the moving object detected from the image.

Arithmetic circuit 11 obtains, from video data 151, the movement amount of the moving object. Specifically, arithmetic circuit 11 obtains a change amount of the moving object in consecutive frames. For example, arithmetic circuit 11 can take a difference in the number of dots of the central coordinates of the rectangular region surrounding the moving object detected from each frame as the amount of change in the moving object per unit time between consecutive frames.

In addition, arithmetic circuit 11 obtains, from imaging direction data 152, the movement amount in the imaging direction. Specifically, arithmetic circuit 11 can take the amounts of change in the pan angle and the tilt angle of the consecutive frames as the movement amount in the imaging direction per unit time between the consecutive frames.

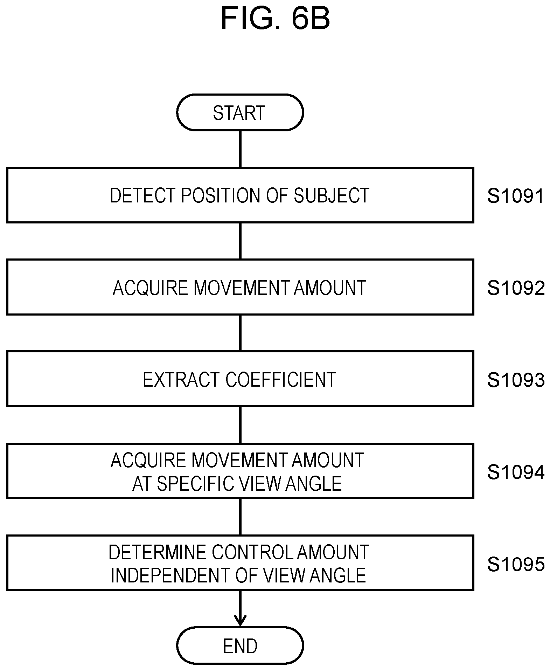

Arithmetic circuit 11 obtains a control signal used by the moving object for the panning and tilting control according to the obtained change amount of the moving object and change amount of the imaging direction. For example, arithmetic circuit 11 can obtain a control signal for controlling the angle change in the pan direction and the angle change in the tilt direction of imaging device 20 using reference data 153 as illustrated in Figs. 3A and 3B. The generation of the control signal will be specifically described with reference to Fig. 6B. In addition, arithmetic circuit 11 transmits the obtained control signal to imaging device 20.

Here, it is not essential for arithmetic circuit 11 to take the movement amount of the moving object and the movement amount in the imaging direction for all the frames included in video data 151. For example, a moving speed may be calculated by obtaining the change amount of the moving object using two consecutive frames captured at the time closest to the current time. By using the latest frame included in video data 151, the moving speed of the moving object can be more accurately predicted.

In this manner, control device 10 can obtain the moving speed of the moving object using video data 151 received from imaging device 20 and imaging direction data 152 in the form of the FreeD data. Then, control device 10 generates a control signal for the panning and tilting control according to the obtained moving speed of the moving object.

### <Imaging device 20>

As illustrated in Fig. 1, imaging device 20 includes arithmetic circuit 21, input device 22, output device 23, communication circuit 24, storage 25, optical mechanism 26, and drive mechanism 27. In imaging device 20, arithmetic circuit 21, input device 22, output device 23, communication circuit 24, and storage 25 may be built in a pan-tilt camera capable of changing the horizontal direction, the vertical direction, and the zoom. Alternatively, a combination of an information processing device including arithmetic circuit 21, input device 22, output device 23, communication circuit 24, and storage 25, and a pan-tilt camera may be used. Here, although imaging device 20 can drive the pan angle and the tilt angle, it is assumed that imaging device 20 is fixed at one place. Therefore, in the present disclosure, a description will be given on an assumption that the pan angle and the tilt angle of imaging device 20 change but the position of imaging device 20 itself does not change.

Arithmetic circuit 21, input device 22, communication circuit 24, and storage 25 are realized by specific means similar to arithmetic circuit 11, the input device 12, communication circuit 14, and storage 15 of control device 10 described above.

Output device 23 may be a lamp or the like that outputs a processing state.

Optical mechanism 26 includes a series of mechanisms related to acquisition of video data, and acquires the video data according to control from arithmetic circuit 21. Specifically, optical mechanism 26 includes an imaging element, an optical system element, an A/D converter, and the like.

Drive mechanism 27 is a mechanism that drives imaging device 20, specifically, optical mechanism 26 in order to control the pan angle and the tilt angle. Drive mechanism 27 can execute optical zoom control and panning and tilting control according to a control signal output from arithmetic circuit 21, specifically, a control signal transmitted from control device 10.

Arithmetic circuit 21 causes display 30 to display video data including a plurality of frames captured using optical mechanism 26. In addition, arithmetic circuit 21 causes storage 25 to store the acquired video data. At this time, arithmetic circuit 11 generates the video data by associating the imaging time with each frame.

Upon reception of the first request signal transmitted from control device 10 via communication circuit 24, arithmetic circuit 21 transmits the video data stored in storage 25 to control device 10 via communication circuit 24. For example, every time arithmetic circuit 21 receives the first request signal from control device 10, the arithmetic circuit transmits video data including frames after the previously transmitted frame to control device 10. Here, the data capacity of the video data is large (for example, several MBytes in one-minute video). On the other hand, in control device 10, the resolution may be any resolution that can be used for panning and tilting control in imaging device 20. Accordingly, control device 10 does not expect the video data to have the resolution equal to that of the video displayed on display 30. Therefore, arithmetic circuit 21 may transmit, to control device 10, video data adjusted to have a resolution lower than that of original video.

Upon reception of the second request signal transmitted from control device 10 via communication circuit 24, arithmetic circuit 21 generates FreeD data as the imaging direction data. In addition, arithmetic circuit 21 transmits the generated imaging direction data to control device 10 via communication circuit 24. The imaging direction data associates the imaging direction indicated by the pan angle and the tilt angle driven by drive mechanism 27 with the imaging time in the case of the imaging direction.

### <Processing in imaging system 1>

The entire processing in imaging system 1 will be described with reference to the sequence diagram illustrated in Fig. 4. Since specific processing of individual steps has been described above, each step will be described in a simplified manner.

In imaging system 1, a series of processing is executed as the capturing is started by imaging device 20 (S001). The video captured here is displayed on display 30. Therefore, the video can be continuously displayed on display 30 while the video is captured by imaging device 20.

Upon starting of imaging by imaging device 20, control device 10 transmits the second request signal at the second timing (S002).

In response to the second request signal transmitted in step S002, imaging device 20 transmits the imaging direction data (S003). The imaging direction data transmitted here is the FreeD data described above with reference to Fig. 2. Therefore, control device 10 can receive the imaging direction data in a relatively short time after transmitting the second request signal.

Control device 10 also transmits the first request signal at the first timing (S004). Here, control device 10 may generate and transmit the first request signal and the second request signal so that the imaging time of the frame included in the received video data is synchronized with the imaging time included in the imaging direction data.

In response to the first request signal transmitted in step S004, imaging device 20 starts transmission of the video data (S005). As described above, the video data transmitted here has a larger data capacity than that if the imaging direction data, and transmission may be delayed. Therefore, a longer time is required from the transmission of the data by imaging device 20 to the completion of the reception of the data by control device 10 as compared to the case of the imaging direction data.

Control device 10 can transmit the second request signal at the second timing after the transmission of the video data is started from imaging device 20 and before the reception of the data for all the frames is completed, but such transmission is not illustrated in Fig. 4.

Imaging device 20 transmits the imaging direction data either in response to the second request signal transmitted from control device 10 or at a predetermined transmission timing (S006, S007). Control device 10 can also receive the imaging direction data transmitted here in a relatively short time. The predetermined transmission timing is a timing at which imaging device 20 transmits FreeD data in a case where the imaging direction data is the FreeD data.

In control device 10, the reception of the series of video data transmitted from imaging device 20 in response to the first request signal transmitted in step S004 is completed (S008, S009).

Upon completion of the reception of the series of video data, control device 10 obtains the movement amount of the moving object and the movement amount in the imaging direction by using the video data and the imaging direction data transmitted from imaging device 20 (S010).

Control device 10 generates a control signal for controlling the imaging direction in imaging device 20 in response to the movement amount of the moving object and the movement amount in the imaging direction obtained in step S010 (S011).

Control device 10 transmits the control signal generated in step S011 to imaging device 20 (S012).

Imaging device 20 executes the panning and tilting control in accordance with the control signal transmitted in step S012 (S013).

In this manner, the processing of steps S002 to S013 illustrated in the sequence diagram of Fig. 4 (within a frame of a broken line) is repeatedly executed while the capturing by imaging device 20 in step S001 is continued. Here, the transmission of the second request signal is executed three times for one time of transmission of the first request signal, but the present invention is not limited thereto. The order of steps S002 to S013 is not limited to the order illustrated in Fig. 4.

In the present exemplary embodiment, an example in which imaging device 20 transmits the video data to control device 10 in response to the first request signal transmitted from control device 10 is described. Further, imaging device 20 transmits the imaging direction data to control device 10 in response to the second request signal transmitted from control device 10. However, the present invention is not limited to such a mode, and imaging device 20 may transmit the video data and the imaging direction data by the PUSH method at a periodical first timing and a periodical second timing that are respectively determined.

### <Processing in control device 10>

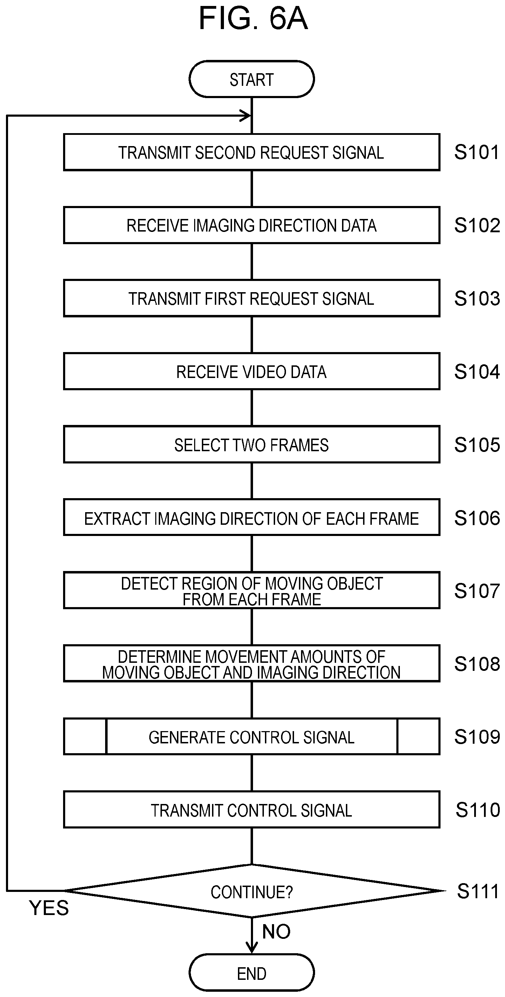

Processing executed in control device 10 will be described with reference to a flowchart illustrated in Fig. 6A. Since the specific processing of the individual steps of the flowchart has been described above, each step will be described in a simplified manner.

Arithmetic circuit 11 transmits the second request signal to imaging device 20 at the second timing (S101). In addition, arithmetic circuit 11 receives the imaging direction data transmitted from imaging device 20 in response to the second request signal transmitted in step S101 (S102). Arithmetic circuit 11 causes storage 15 to store received imaging direction data 152. Note that although arithmetic circuit 11 repeats the transmission of the second request signal and the reception of the imaging direction data every second timing, the transmission of the second request signal and the reception of the imaging direction data a plurality of times are not illustrated in the flowchart of Fig. 6A, and one transmission and one reception are only illustrated.

Arithmetic circuit 11 transmits the first request signal to imaging device 20 at the first timing (S103). Arithmetic circuit 11 receives the video data transmitted from imaging device 20 in response to the first request signal transmitted in step S103 (S104). Arithmetic circuit 11 causes storage 15 to store received video data 151.

Thereafter, arithmetic circuit 11 selects two consecutive frames captured at the time closest to the current time from video data 151 received in step S104 (S105).

Next, arithmetic circuit 11 extracts the imaging directions of the two frames selected in step S105 from imaging direction data 152 received in each step S102 (S106). Specifically, arithmetic circuit 11 extracts the pan angle and the tilt angle associated with the imaging times of the two frames selected in step S105 from imaging direction data 152 stored in storage 15.

In addition, arithmetic circuit 11 detects the region of the moving object from each frame selected in step S105 (S107).

Subsequently, arithmetic circuit 11 obtains the movement amount of the moving object detected in step S107 and the movement amount in the imaging direction extracted in step S106 (S108).

Next, arithmetic circuit 11 generates a control signal for executing the panning and tilting control based on the movement amount of the moving object and the movement amount in the imaging direction obtained in step S108 (S109). The generation of the control signal executed in step S109 will be described with reference to a flowchart illustrated in Fig. 6B.

Regarding the processing described below with reference to the flowchart illustrated in Fig. 6B, arithmetic circuit 11 separately executes the processing in the pan direction and the processing in the tilt direction. Specifically, arithmetic circuit 11 executes each processing of steps S1092 to S1095 described below in each of the pan direction and the tilt direction.

As illustrated in the flowchart of Fig. 6B, first, arithmetic circuit 11 detects a "previous subject position" specified from a "previous image" and a "current subject position" specified from a "current image" (S1091).

Next, arithmetic circuit 11 obtains the movement amount in the pan direction and the movement amount in the tilt direction using the positions detected in step S1091 (S1092). Specifically, between the previous subject position and the current subject position, the difference in the pan direction is obtained as the movement amount in the pan direction and the difference in the tilt direction is obtained as the movement amount in the tilt direction (movement amount = previous position of subject - current position of subject).

Subsequently, arithmetic circuit 11 extracts a coefficient corresponding to a time of a difference between the previous position time and the current position time using the first reference data 153 stored in storage 15 in advance (S1093).

Subsequently, arithmetic circuit 11 multiplies the movement amount of the subject obtained in step 1092 by the coefficient (predetermined coefficient 1) extracted in step S1093 to obtain a "movement amount in a specific view angle" (S1094) (movement amount in specific view angle = movement amount × predetermined coefficient 1). The specific view angle used in step S1094 is the view angle of imaging device 20.

Subsequently, arithmetic circuit 11 multiplies the movement amount of the subject at the specific view angle obtained in step S1094 by a predetermined coefficient to obtain the "control amount of the pan angle and the tilt angle independent of the view angle" (S1095) (control amount independent of view angle = movement amount at specific view angle × predetermined coefficient 2). As a result, arithmetic circuit 11 ends the processing of generating the control signal in step S109. Note that predetermined coefficient 2 used in step S1095 can be obtained using a coefficient obtained using the zoom magnification of the lens. Specifically, the view angle specified by the zoom magnification stored as reference data 153 described with reference to Fig. 3B is divided by the view angle when the zoom magnification is 1 to obtain a coefficient (coefficient 2) to be multiplied by the movement amount at the specific view angle. For example, when the zoom magnification is 2 in the horizontal direction, the coefficient (coefficient 2) to be multiplied in the horizontal direction becomes 0.52 based on 39/75=0.52 (times). Furthermore, when the zoom magnification is 2 in the vertical direction, the coefficient to be multiplied in the vertical direction (coefficient 2) becomes 0.50 based on 23/46=0.50 (times).

Arithmetic circuit 11 transmits the control signal generated in step S109 to imaging device 20 (S110).

While imaging is continued in imaging device 20 (YES in S111), arithmetic circuit 11 repeats the processing of steps S101 to S111. Note that the order of the processing described above with reference to the flowchart illustrated in Fig. 6B is not limited, and the processing that can be executed at the same time may be executed at the same time, and the processing that can be executed by being rearranged may be executed by being rearranged in the order.

As described above, the imaging system of the present disclosure acquires the imaging direction data at the timing synchronized with the imaging timing of the plurality of frames included in the imaging data when the moving object is tracked and a video of the moving object is captured. As a result, the imaging system can more accurately obtain the moving speed of the moving object. Therefore, in the imaging system, when the imaging device tracks the moving object and captures a video of the moving object, smooth panning and tilting control according to the movement of the moving object can be executed.

### [Modification]

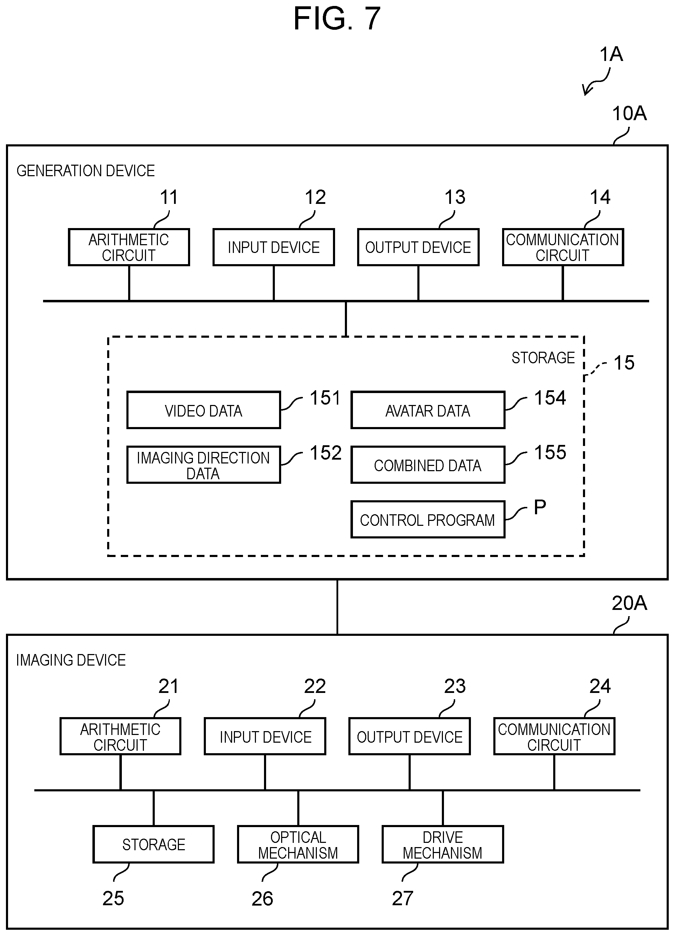

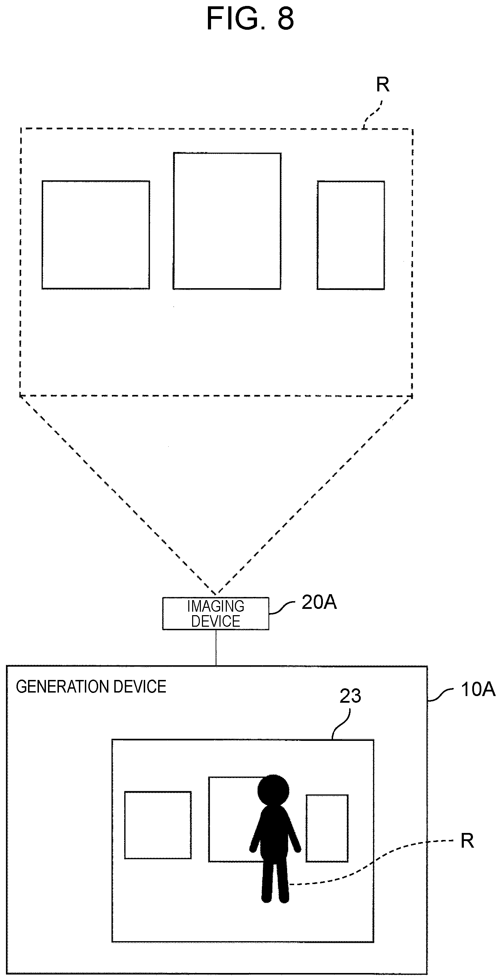

Imaging system 1 described above with reference to Fig. 1 controls the imaging direction of the imaging device that tracks the moving object. On the other hand, in generation system 1A described with reference to Fig. 7, generation device 10A generates the augmented reality video in which the avatar is synthesized with the video of the real space captured by imaging device 20A according to the imaging direction of imaging device 20A. Therefore, as illustrated in Fig. 8, a display for displaying a captured video may not be connected to imaging device 20A. Generation device 10A may generate and display a video in which an avatar is combined with video data of real space R captured by imaging device 20A on the display that is output device 23 In the description of generation device 10A and imaging device 20A, the same components as those of control device 10 and imaging device 20 are denoted by the same reference numerals, and the description thereof will be omitted.

### <Generation device 10A>

Generation device 10A is different from control device 10 in that avatar data 154 is stored instead of reference data 153 in storage 15. Avatar data 154 includes data representing avatars viewed from a plurality of different directions. For example, even in the same avatar, when viewed from an oblique direction, a portion that is not seen when viewed from the front may be seen. Avatar data 154 includes data representing the avatars respectively viewed from such directions.

Arithmetic circuit 11 of generation device 10A acquires, at the first timing, the video data associating the plurality of consecutive frames captured by imaging device 20A with the imaging time of each frame. In addition, arithmetic circuit 11 causes storage 15 to store acquired video data 151.

Arithmetic circuit 11 acquires, at the second timing different from the first timing, imaging direction data associating an imaging direction acquired by imaging device 20A in synchronization with imaging of each frame with an imaging time. In addition, arithmetic circuit 11 causes storage 15 to store acquired imaging direction data 152.

Arithmetic circuit 11 extracts angle information associated with the imaging time from the acquired imaging direction data 152.

Arithmetic circuit 11 refers to avatar data 154 and generates combined data obtained by synthesizing the video of the avatar corresponding to the extracted angle information with the video data.

### <Imaging device 20A>

Imaging device 20A has the same configuration as imaging device 20. Imaging device 20A does not display the video on display 30, and transmits the video data used in the generation of the combined data to generation device 10A.

Arithmetic circuit 21 transmits the video data to generation device 10A in response to the first request signal. Further, arithmetic circuit 21 transmits the video data to generation device 10A in response to the second request signal. Imaging device 20 of imaging system 1 described above may transmit, to control device 10, the video data including only a part of the decimated frames and not including all the captured frames. On the other hand, imaging device 20A of generation system 1A transmits, to generation device 10A, the video data including all the captured frames without decimation.

### <Processing in generation system>

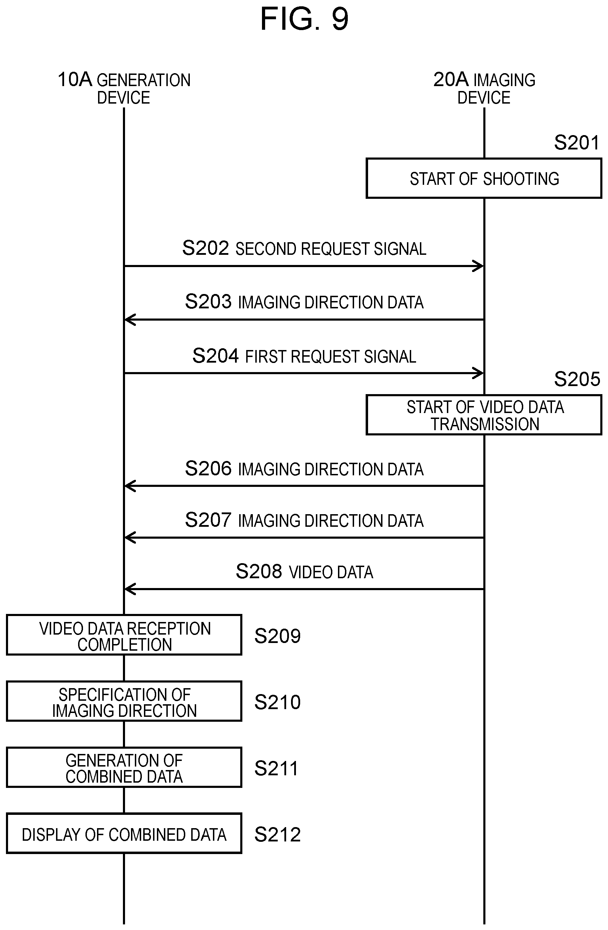

The entire processing in generation system 1A will be described with reference to a sequence diagram illustrated in Fig. 9.

Imaging device 20A starts capturing an image (S201).

Upon starting of imaging by imaging device 20A, generation device 10A transmits the second request signal at the second timing (S202).

In response to the second request signal transmitted in step S202, imaging device 20A transmits the imaging direction data (S203).

Generation device 10A also transmits the first request signal at the first timing (S204).

In response to the first request signal transmitted in step S204, imaging device 20A starts transmission of the video data (S205).

Generation device 10A can transmit the second request signal at the second timing after the transmission of the video data is started from imaging device 20A and before the reception of the data for all the frames is completed, but such transmission is not illustrated in Fig. 9.

Imaging device 20A transmits the imaging direction data either in response to the second request signal transmitted from generation device 10A or at a predetermined transmission timing (S206, S207). In a case where the imaging direction data is the FreeD data, this is a timing at which imaging device 20A transmits the FreeD data.

In generation device 10A, the reception of the series of video data transmitted from imaging device 20 in response to the first request signal transmitted in step S204 is completed (S208, S209).

Upon completion of the reception of the series of video data, generation device 10A specifies the imaging direction at the time of capturing each frame by using the video data and the imaging direction data transmitted from imaging device 20 (S210).

Generation device 10A generates combined data 155 by combining an avatar corresponding to the imaging direction specified in step S210 in the avatar data 154 with the video data 151 received in step S208 (S211).

Generation device 10A displays combined data 155 generated in step S211 on output device 23 (S212).

In generation system 1A according to the modification, imaging device 20A transmits the video data or the imaging direction data in response to the first request signal or the second request signal. However, also in generation system 1A, imaging device 20A may transmit the video data and the imaging direction data by the PUSH method at a periodical first timing and a periodical second timing that are respectively determined.

As described above, when the avatar is combined with the video of the real space, the generation device of the generation system of the modification acquires the imaging direction data at the timing synchronized with the imaging timing of the plurality of frames included in the imaging data of the video of the real space. As a result, the generation device can generate combined data obtained by combining the video of the natural avatar according to the change in the pan angle and the tilt angle with the video data captured by the imaging device.

### <<Overview of exemplary embodiment>>

(1) The imaging system of the present disclosure may be an imaging system to which an imaging device that captures a video of a moving object and a control device are connected, in which
   the control device includes: a communication circuit that receives a video captured by the imaging device; and an arithmetic circuit that controls an imaging direction of the imaging device based on the received video, and
   the arithmetic circuit includes:
      acquiring, at a first timing, video data including a plurality of frames captured by the imaging device and imaging time of each of the frames;
      acquiring, at a second timing, imaging direction data including an imaging direction acquired by the imaging device in synchronization with each of the frames and the imaging time, the second timing being different from the first timing;
      obtaining, from the plurality of frames of the video data, a movement amount of the moving object during capturing of the plurality of frames;
      obtaining, from the imaging direction data, a movement amount in the imaging direction acquired in synchronization with the plurality of frames; and
      transmitting a control signal to the imaging device in accordance with the movement amount of the moving object and the movement amount in the imaging direction, the control signal controlling the imaging direction in accordance with movement of the moving object.

As a result, the panning and tilting control can be smoothly executed when the imaging device tracks the moving object and captures a video of the moving object.

(2) The control method of the present disclosure may be a control method executed by a control device connected to an imaging device that captures a video of a moving object, the control device including a communication circuit that receives a video captured by the imaging device and an arithmetic circuit that controls an imaging direction of the imaging device based on the received video, the control method, in the arithmetic circuit, including:
acquiring, at a first timing, video data including a plurality of frames captured by the imaging device and imaging time of each of the frames;
acquiring, at a second timing, imaging direction data including an imaging direction acquired by the imaging device in synchronization with each of the frames and the imaging time, the second timing being different from the first timing;
obtaining, from the plurality of frames of the video data, a movement amount of the moving object during capturing of the plurality of frames;
obtaining, from the imaging direction data, a movement amount in the imaging direction acquired in synchronization with the plurality of frames; and
transmitting a control signal to the imaging device in accordance with the movement amount of the moving object and the movement amount in the imaging direction, the control signal controlling the imaging direction in accordance with movement of the moving object.

As a result, the panning and tilting control can be smoothly executed when the imaging device tracks the moving object and captures a video of the moving object.

(3) In the imaging device and the control device according to (2), a FreeD protocol may be used, and
the imaging direction may be represented by a pan angle and a tilt angle, and
the imaging direction data may include, in FreeD data used in the FreeD protocol, the pan angle in an area described by 3 Bytes of top one to three, the tilt angle in an area described by 3 Bytes of top four to six, and the imaging time in an area described by 2 Bytes of top twenty-five to twenty-six.

As a result, existing data can be used for the panning and tilting control without transmitting new data for the panning and tilting control.

(4) The control method according to (2) or (3) may be a control method, in which
the control device includes a storage that stores reference data associating a range of the movement amount of the moving object and a range of the movement amount in the imaging direction with the control signal in a case of the range of the movement amount of the moving object and the range of the movement amount in the imaging direction, and
the arithmetic circuit, by referring to the reference data, extracts a control signal associated with the obtained movement amount of the moving object and the obtained movement amount in the imaging direction, and transmits the extracted control signal to the imaging device.

As a result, it is possible to easily determine the control signal for executing the panning and tilting control based on the movement amount of the moving object and the movement amount in the imaging direction.

(5) The control method according to one of (2) to (4) may be a control method, in which
the arithmetic circuit:
compares two consecutive frames included in the video data, the two consecutive frames being captured at time closest to a current time; and
obtains the movement amount of the moving object based on a change amount of coordinates of images of the moving object included in the two frames.

As a result, it is possible to determine the control signal for efficiently executing the panning and tilting control using the region of the moving object detected from the two consecutive frames and the movement amounts in the imaging directions of the two frames.

(6) The video generation method of the present disclosure may be a video generation method executed by a generation device that is connected to an imaging device and that generates an augmented reality video, the generation device including: a communication circuit that receives a video of a real space captured by the imaging device; an arithmetic circuit that combines an avatar with the video of the real space in accordance with an imaging direction of the imaging device based on the received video; and a storage, in which the storage stores avatar data including data representing the avatar viewed from a plurality of different directions, the video generation method, in the arithmetic circuit, including:
acquiring, at a first timing, video data including a plurality of consecutive frames captured by the imaging device and imaging time of each of the frames;
acquiring, at a second timing, imaging direction data including an imaging direction acquired by the imaging device in synchronization with each of the frames and the imaging time, the second timing being different from the first timing;
extracting, from the acquired imaging direction data, angle information associated with the imaging time; and
combining, by referring to the avatar data, a video of the avatar corresponding to the extracted angle information with the video data.

As a result, it is possible to generate an augmented reality video in which an avatar shown from a natural direction with respect to the imaging direction in which an imaging device captures an image is synthesized with a video of the real space.

(7) The computer program according to the present disclosure is a computer program that causes an information processing device to execute the method according to one of (2) to (5), in which the computer program is executed by the control device that is connected to the imaging device that captures a video of the moving object, that receives the video captured by the imaging device, and that controls the imaging direction of the imaging device based on the video. The computer program may be stored in a storage medium.

The imaging system, the control method, the video generation method, and the computer program according to all of claims of the present disclosure are implemented by cooperation with hardware resources, for example, a processor, a memory, and a computer program.

### INDUSTRIAL APPLICABILITY

The imaging system, the control method, and the computer program of the present disclosure are useful for the panning and tilting control of a camera that tracks and captures a video of a moving object.

### REFERENCE MARKS IN THE DRAWINGS

1: imaging system
1A: generation system
10: control device
10A: generation device
20, 20A: imaging device
11, 21: arithmetic circuit
12, 22: input device
13, 23: output device
14, 24: communication circuit
15, 25: storage
151: video data
152: imaging direction data
153: reference data
154: avatar data
155: combined data
26: optical mechanism
27: drive mechanism
P: control program
R: real space

## Claims

1. An imaging system comprising:
an imaging device that captures a video of a moving object; and
a control device connected to the imaging device,
wherein the control device includes: a communication circuit that receives the video captured by the imaging device; and an arithmetic circuit that controls an imaging direction of the imaging device based on the video received, and
the arithmetic circuit includes:
acquiring, at a first timing, video data including a plurality of frames captured by the imaging device and imaging time of each of the plurality of frames;
acquiring, at a second timing, imaging direction data including an imaging direction acquired by the imaging device in synchronization with each of the plurality of frames and the imaging time, the second timing being different from the first timing;
obtaining, from the plurality of frames of the video data, a movement amount of the moving object during capturing of the plurality of frames;
obtaining, from the imaging direction data, a movement amount in the imaging direction acquired in synchronization with the plurality of frames; and
transmitting a control signal to the imaging device in accordance with the movement amount of the moving object and the movement amount in the imaging direction, the control signal controlling the imaging direction in accordance with movement of the moving object.

2. A control method executed by a control device connected to an imaging device that captures a video of a moving object, the control device including a communication circuit that receives the video captured by the imaging device and an arithmetic circuit that controls an imaging direction of the imaging device based on the video received, the control method, in the arithmetic circuit, comprising:
acquiring, at a first timing, video data including a plurality of frames captured by the imaging device and imaging time of each of the plurality of frames;
acquiring, at a second timing, imaging direction data including an imaging direction acquired by the imaging device in synchronization with each of the plurality of frames and the imaging time, the second timing being different from the first timing;
obtaining, from the plurality of frames of the video data, a movement amount of the moving object during capturing of the plurality of frames;
obtaining, from the imaging direction data, a movement amount in the imaging direction acquired in synchronization with the plurality of frames; and
transmitting a control signal to the imaging device in accordance with the movement amount of the moving object and the movement amount in the imaging direction, the control signal controlling the imaging direction in accordance with movement of the moving object.

3. The control method according to claim 2, wherein
the imaging device and the control device use a FreeD protocol,
the imaging direction is represented by a pan angle and a tilt angle, and
the imaging direction data includes, in FreeD data used in the FreeD protocol, the pan angle in an area described by 3 Bytes of top one to three, the tilt angle in an area described by 3 Bytes of top four to six, and the imaging time in an area described by 2 Bytes of top twenty-five to twenty-six.

4. The control method according to claim 2, wherein
the control device includes a storage that stores reference data associating a range of the movement amount of the moving object and a range of the movement amount in the imaging direction with the control signal in a case of the range of the movement amount of the moving object and the range of the movement amount in the imaging direction, and
the arithmetic circuit, by referring to the reference data, extracts a control signal associated with the obtained movement amount of the moving object and the obtained movement amount in the imaging direction, and transmits the extracted control signal to the imaging device.

5. The control method according to claim 2, wherein
the arithmetic circuit:
compares two consecutive frames of the plurality of frames included in the video data, the two consecutive frames being captured at imaging time closest to a current time; and
obtains the movement amount of the moving object based on a change amount of coordinates of images of the moving object included in the two consecutive frames.

6. A video generation method executed by a generation device that is connected to an imaging device and that generates an augmented reality video, the generation device including: a communication circuit that receives a video of a real space captured by the imaging device; an arithmetic circuit that combines an avatar with the video of the real space in accordance with an imaging direction of the imaging device based on the received video of the real space; and a storage, wherein the storage stores avatar data including data representing the avatar viewed from a plurality of different directions, the video generation method, in the arithmetic circuit, comprising:
acquiring, at a first timing, video data including a plurality of consecutive frames captured by the imaging device and imaging time of each of the plurality of frames;
acquiring, at a second timing, imaging direction data including an imaging direction acquired by the imaging device in synchronization with each of the plurality of frames and the imaging time, the second timing being different from the first timing;
extracting, from the acquired imaging direction data, angle information associated with the imaging time; and
combining, by referring to the avatar data, a video of the avatar corresponding to the extracted angle information with the video data.

7. A computer program for causing an information processing device to execute the control method according to one of claims 2 to 5, the control method being executed by the control device that is connected to the imaging device that captures a video of the moving object, receives the video captured by the imaging device, and controls the imaging direction of the imaging device based on the video.
